# EUROPEAN PATENT APPLICATION

(11) **EP 3 671 897 A1**
(43) Date of publication of application: **24.06.2020**
(21) Application number: 18845887.1
(22) Date of filing: 04.04.2018
(51) Int. Cl.: H01M 2/12

(54) **RUPTURE PANEL**

(30) Priority: 16.08.2017 CN 201721034703 U
(71) Applicant: Changzhou Red Fairy Precision Technology Co., Ltd., Changzhou, Jiangsu 210000 (CN)
(72) Inventor: WANG, Yousheng, Shenzhen Guangdong 518107 (CN); DING, Chaoyang, Shenzhen Guangdong 518107 (CN); DING, Kun, Shenzhen Guangdong 518107 (CN)
(74) Representative: Schornack, Oliver
(86) International application number: PCT/CN2018/081953
(87) International publication number: WO 2019/033767

(57) **Abstract**

The present application relates to the technical field of battery explosion-proof and discloses an explosion-proof sheet including a sheet body. A recess loop in a shape of an enclosed loop is formed in the sheet body, and a flip portion is formed in the sheet body within a region enclosed by the recess loop. A score in a shape of a non-enclosed loop is arranged within the recess loop, the score extends along a circumference direction of the recess loop, and a portion of the recess loop located between two ends of the score forms a connection segment configured for turning over the flip portion. By arranging the recess loop on the sheet body and arranging the score in the shape of a non-enclosed loop within the recess loop, the rigidity of the explosion-proof sheet can be enhanced. In case that the pressure exerted on the explosion-proof sheet has not achieved a critical point, the explosion-proof sheet does not tend to be deformed, thus avoiding the influence on the pressure within the lithium battery; and in case that the pressure exerted on the explosion-proof sheet has achieved the preset critical point, the explosion-proof sheet bursts at the score, such that the flip portion turns around the connection segment, and the original site of the flip portion forms a hole, through which the abnormal gas inside the lithium battery is discharged in time, and the lithium battery is prevented from the danger of explosion.

## Description

### TECHNCIAL FIELD

The present application relates to the technical field of battery explosion-proof, and more particularly to an explosion-proof sheet for a battery.

### BACKGROUND

Nowadays, with the miniaturization and portability of electronic products, including cameras, notebook pcs, and mobile phones, driving powers of such electronic products have the developing tendency to large capacity, high safety, and portability. Lithium batteries are widely applied in the electronic products due to their excellent properties, such as large capacity.

A typical lithium battery includes: a casing, a cover plate, and a cathode mix. The cathode mix is disposed within the casing, an upper end of the casing defines an upper opening, and the cover plate is configured to seal the upper opening of the casing. The cover plate is provided with ports, through which the lithium battery supplies power to external devices.

The cathode mix is used as an electric power storage component of the lithium battery. In the use of the lithium battery, an abnormal gas may be produced within the casing due to the charger factors and the progress of the chemical reactions within the lithium battery, which would result in a too high internal pressure within the casing of the lithium battery. In case that the internal pressure of the casing continues to increase, the internal pressure of the lithium battery becomes too high, which in turn results in explosion accident of the lithium battery, thereby damaging the electronic products or even hurts the user.

To avoid the lithium battery from explosion, an explosion-proof sheet is typically provided on the cover plate of the lithium battery. When the internal pressure of the lithium battery exceeds a certain value, the explosion-proof sheet will break, which therefore allows the abnormal gas to discharge out of the lithium battery, lower the internal pressure of the lithium battery, prevents the danger of explosion due to the too high of the internal pressure within the lithium battery, and makes the use of the lithium battery much safer. In case of being exerted with a pressure inside the battery that has not achieved the critical point, the explosion-proof sheet tends to be deformed itself, which increases the internal capacity of the battery and prolongs the bursting time of the explosion-proof sheet, therefore, the bursting mechanism of the lithium battery fails to respond in time and may cause the battery to explode.

### TECHNICAL PROBLEMS

The present application provides an explosion-proof sheet, which aims at solving the technical problem in the prior art that the explosion-proof sheet tends to be deformed to increase the internal capacity of the battery, prolong the bursting time of the explosion-proof sheet, which would in turn make the bursting mechanism of the lithium battery fail to respond in time and may cause the battery to explode.

### TECHNICAL SOLUTIONS

The explosion-proof sheet of the present application is realized as follows: an explosion-proof sheet, comprises a sheet body formed as a whole. A recess loop in a shape of an enclosed loop is formed in the sheet body, a flip portion is formed in the sheet body within a region enclosed by the recess loop. A score in a shape of a non-enclosed loop is arranged within the recess loop, the score extends along a circumference direction of the recess loop, and a portion of the recess loop located between two ends of the score forms a connection segment configured for turning over the flip portion.

Further, one recess loop is formed in the sheet body, and only one flip portion is formed within the region enclosed by the one recess loop.

Further, the recess loop is in a rectangular shape including a lengthwise portion and a crosswise portion, and the connection segment is arranged at the lengthwise portion.

Further, two recess loops are formed in the sheet body and are arranged in parallel with each other, and only one flip portion is formed within the region enclosed by each of the two recess loops.

Further, adjacent portions of the two recess loops overlap with each other to form an overlapping portion.

Further, the connection segments of the two recess loops are arranged on the recess loops opposite to the overlapping portion, respectively.

Further, the sheet body comprises a connecting loop in a shape of an enclosed loop and surrounding a periphery of the recess loop.

Further, a thickness of the flip portion is no smaller than a thickness of the connecting loop.

Further, the score is formed at a middle part of the recess loop.

### ADVANTAGES

Compared with the prior art, in the explosion-proof sheet provided by the present application, the recess loop is arranged on the sheet body, the score in the shape of a non-enclosed loop is arranged within the recess loop, the connection segment is formed at the portion of the recess loop between two ends of the score, and the flip portion is formed within the recess loop, in this way, the rigidity of the explosion-proof sheet can be enhanced. In case that the pressure exerted on the explosion-proof sheet has not achieved a critical point, the explosion-proof sheet with high rigidity does not tend to be deformed, thus avoiding the influence on the pressure within the lithium battery; and in case that the pressure exerted on the explosion-proof sheet has achieved the preset critical point, the explosion-proof sheet bursts at the score, such that the flip portion turns around the connection segment, and the original site of the flip portion forms a hole, through which the abnormal gas inside the lithium battery is discharged in time, and the lithium battery is prevented from the danger of explosion, thus, it is solved the problem that the explosion-proof sheet with relatively large area tends to be deformed to increase the internal capacity of the battery and prolong the bursting time of the explosion-proof sheet, which in turn makes the explosion mechanism of the lithium battery fail to respond in time and causes the battery to explode.

### DESCRIPTION OF THE DRAWINGS

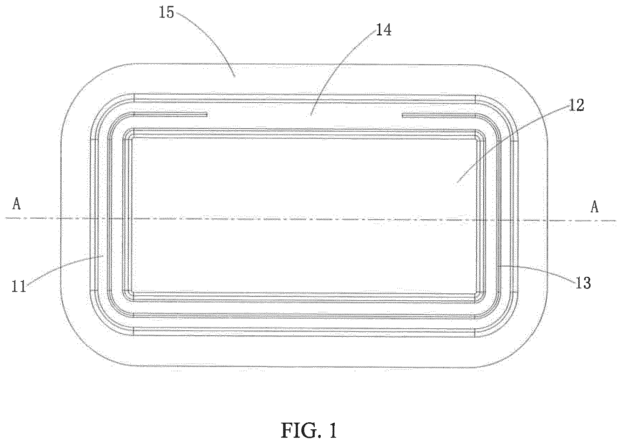

FIG. 1 is a top view of an explosion-proof sheet having a sheet body provided with one bursting unit according to an embodiment of the present application;

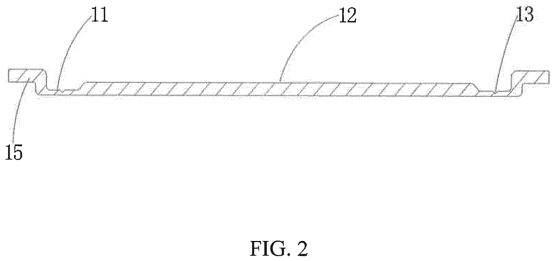

FIG. 2 is a cross-sectional view taken from line A-A of FIG. 1; and

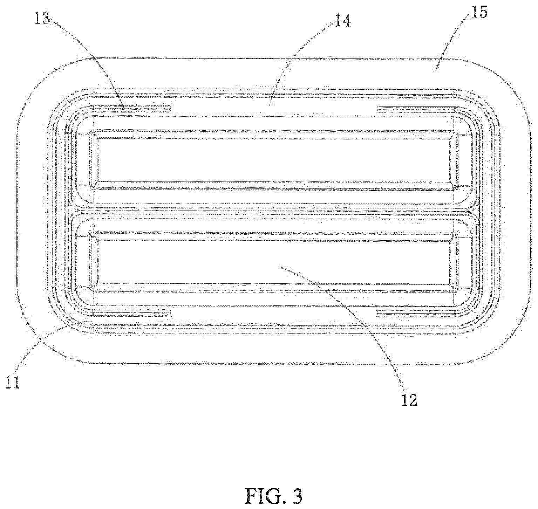

FIG. 3 is a top view of an explosion-proof sheet having a sheet body provided with two bursting units according to the embodiment of the present application.

### EMBODIMENTS OF THE PRESENT APPLICATION

In order to make the objects, technical solutions, and advantages of the present application clearer and more comprehensible, the present application will be further described in detail below with reference to the accompanying drawings and embodiments. It is understood that the specific embodiments described herein are merely illustrative of the present application and are not intended to limit the present application.

The implementation of the present application will be described in detail below with reference to specific embodiments.

The same or similar reference numerals in the drawings of embodiments correspond to the same or similar components. In the description of the present application, it is to be understood that terms "upper", "lower", "left", "right", and the like indicating orientation or positional relationship are based on the orientation or the positional relationship shown in the drawings, and are merely for facilitating and simplifying the description of the present application, rather than indicating or implying that a device or component must have a particular orientation, or be configured or operated in a particular orientation, thus, the terms indicating positional relationship are only used for illustrative description but should not be construed as limiting the application. For those skilled in the art, the specific meaning of the above terms may be understood according to specific circumstances.

Referring to the drawings, preferred embodiments of the present application are provided.

A explosion-proof sheet provided by the present application aims at solving the problem that the explosion-proof sheet in the lithium battery is difficult to achieve the directional bursting and will produce a large amount of fragments after being broken, and the explosion-proof sheet of the present application may also be applicable to other kinds of batteries, but not limited to the present embodiments.

A explosion-proof sheet comprises a sheet body formed as a whole, and a recess loop 11 in a shape of an enclosed loop is formed in the sheet body. In this embodiment, the recess loop has a uniform width everywhere. A flip portion 12 is formed in the sheet body within a region enclosed by the recess loop 11. A score in a shape of a non-enclosed loop is arranged within the recess loop 11, the score 13 extends along a circumference direction of the recess loop 11, and a portion of the recess loop 11 located between two ends of the score 13 forms a connection segment 14 configured for turning over the flip portion 12.

By arranging the recess loop 11 on the sheet body, arranging the score in the shape of a non-enclosed loop within the recess loop, forming the connection segment 14 at the portion of the recess loop 11 between two ends of the score 13, and forming the flip portion 12 within the recess loop 11, the rigidity of the explosion-proof sheet can be enhanced. In case that the pressure exerted on the explosion-proof sheet has not achieved a critical point, the explosion-proof sheet with high rigidity does not tend to be deformed, thus avoiding the influence on the pressure within the lithium battery; and in case that the pressure exerted on the explosion-proof sheet has achieved the preset critical point, the explosion-proof sheet bursts at the score 13, such that the flip portion 12 turns around the connection segment 14, and the original site of the flip portion forms a hole, through which the abnormal gas inside the lithium battery is discharged in time, and the lithium battery is prevented from the danger of explosion, thereby solving the problem that the explosion-proof sheet tends to be deformed and the explosion-proof sheet with high rigidity cannot burst in time and would result in the explosion of the lithium battery.

In an embodiment, one recess loop 11 is formed in the sheet body, and only one flip portion 12 is formed within the region enclosed by the one recess loop 11. When the internal pressure of the lithium battery is too high, the recess loop 11 breaks at the score 13, and the abnormal gas is discharged out of the lithium battery via the hole, which is formed after the flip portion 12 turns over, in this way, the use of the lithium battery is much safer. The size of the recess loop 11 may be designed according to practical needs.

In particular, the recess loop 11 is in a rectangular shape including a lengthwise portion and a crosswise portion, and the connection segment 14 is arranged at the lengthwise portion 11. In this way, when the flip portion turns over, the required space and height are relatively small, which enables the lithium battery provided with the explosion-proof sheet to be installed inside a device.

In an embodiment, two recess loops 11 are formed in the sheet body and are arranged in parallel with each other, and only one flip portion is formed within the region enclosed by each of the two recess loops 11. In this way, on the premise of the same total area of the recess loop 11, the size of the respective recess loop 11 may be designed to be smaller, and the flip portion 12 arranged inside the respective recess loop 11 may also designed to have a smaller size, which facilitates the use of the explosion-proof sheet. According to practical needs, three or more recess loops 11 may be provided.

In particular, adjacent portions of the two recess loops 11 overlap with each other to form an overlapping portion. When the internal pressure of the lithium battery is too high, the two flip portions 12 turn over to form two holes interconnected with each other, respectively, presenting a larger hole, which makes the abnormal gas quickly discharged out of the lithium battery.

In particular, the connection segments 14 of the two recess loops 11 are arranged on the recess loops 11 opposite to the overlapping portion, respectively. In this way, when the internal pressure of the lithium battery is too high, the two flip portions 12 turn towards two opposite sides, respectively, which facilitates the pressure decrease and avoids the explosion of the lithium battery.

In an embodiment, the sheet body comprises a connecting loop 15 in a shape of an enclosed loop and surrounding a periphery of the recess loop 11. An inner side of the connecting loop 15 is in connection with the recess loop 11, and an outer layer of the connecting loop is in connection with the cover plate, therefore, the flip portion is capable of realizing a seamless connection with the cover plate, facilitating the use of the flip portion.

In particular, a thickness of the flip portion 12 is no smaller than a thickness of the connecting loop 15. In this way, the rigidity and intensity of the explosion-proof sheet are further enhanced, the explosion-proof sheet is avoided from being deformed, and in the meanwhile, the flip portion 12 is prevented from breaking in the bursting process of the explosion-proof sheet, which would otherwise produce bursting fragments and increase the difficulty of the subsequent cleaning and replacement.

In an embodiment, the score 13 is formed at a middle part of the recess loop 11. In this way, when the internal pressure of the lithium battery is exerted on the recess loop 11, the recess loop 11 can break at the score 13 in the middle part thereof in time, which enables the flip portion 12 to turn over in time, and the internal pressure of the lithium battery can be reduced in time.

The above is only preferred embodiments of the present application, and is not intended to limit the present application. Any modifications, equivalent substitutions, and improvements made within the spirit and principles of the present application should be included in the protection scope of the present application.

## Claims

1. An explosion-proof sheet, comprising a sheet body formed as a whole, wherein a recess loop in a shape of an enclosed loop is formed in the sheet body, a flip portion is formed in the sheet body within a region enclosed by the recess loop; a score in a shape of a non-enclosed loop is arranged within the recess loop, the score extends along a circumference direction of the recess loop, and a portion of the recess loop located between two ends of the score forms a connection segment configured for turning over the flip portion.

2. The explosion-proof sheet of claim 1, wherein one recess loop is formed in the sheet body, and only one flip portion is formed within the region enclosed by the one recess loop.

3. The explosion-proof sheet of claim 2, wherein the recess loop is in a rectangular shape including a lengthwise portion and a crosswise portion, and the connection segment is arranged at the lengthwise portion.

4. The explosion-proof sheet of claim 1, wherein two recess loops are formed in the sheet body and are arranged in parallel with each other, and only one flip portion is formed within the region enclosed by each of the two recess loops.

5. The explosion-proof sheet of claim 4, wherein adjacent portions of the two recess loops overlap with each other to form an overlapping portion.

6. The explosion-proof sheet of claim 5, wherein the connection segments of the two recess loops are arranged on the recess loops opposite to the overlapping portion, respectively.

7. The explosion-proof sheet of any of claims 1-6, wherein the sheet body comprises a connecting loop in a shape of an enclosed loop and surrounding a periphery of the recess loop.

8. The explosion-proof sheet of claim 7, wherein a thickness of the flip portion is no smaller than a thickness of the connecting loop.

9. The explosion-proof sheet of any of claims 1-6, wherein the score is formed at a middle part of the recess loop.
